# FASCICULE DE BREVET EUROPEEN

(11) **EP 4 054 897 B1**
(45) Date de publication et mention de la délivrance du brevet: **11.11.2026**
(21) Numéro de dépôt: 20797141.7
(22) Date de dépôt: 02.11.2020
(51) Int. Cl.: B60R 11/02, G10K 15/00, H04R 5/02

(54) **SYSTEME AUDIO POUR VEHICULE**
AUDIOSYSTEM FÜR EIN FAHRZEUG
AUDIO SYSTEM FOR A VEHICLE

(30) Priorité: 05.11.2019 FR 1912416
(43) Date de publication de la demande: 14.09.2022
(73) Titulaire: Saint-Gobain Sekurit France, 60150 Thourotte (FR)
(72) Inventeur: QI, Shuibao, 60200 COMPIEGNE (FR); LALLEMENT, Antoine, 60200 COMPIEGNE (FR); JAAFAR, Adil, 60280 MARGNY-LES-COMPIEGNE (FR)
(74) Mandataire: Saint-Gobain Recherche
(86) Numéro de dépôt international: PCT/EP2020/080633
(87) Numéro de publication internationale: WO 2021/089457

(56) Documents cités:
- WO-A1-2009/061885
- WO-A1-96/35313
- WO-A1-98/42536
- DE-A1- 10 164 509
- FR-A1- 3 021 268
- US-A1- 2009 169 031

## Description

### Domaine de l'invention

La présente invention concerne toit comprenant un panneau et un ou plusieurs haut-parleurs et/ou actionneurs ainsi qu'un véhicule comprenant un tel toit.

### Arrière-plan technique

En raison du développement de l'info-divertissement, les systèmes audios sont aujourd'hui devenus une part importante des véhicules.

Les haut-parleurs composant ces systèmes audios sont, dans une grande partie des véhicules, présents dans les portières et dans le tableau de bord du véhicule. Cependant, cette disposition des haut-parleurs présente plusieurs inconvénients. En effet, en raison de la mobilité des portières, les haut-parleurs doivent être intégrés dans celles-ci par le biais de constructions rigides permettant de réduire les vibrations et de stabiliser les haut-parleurs. Ces constructions occupent un espace important dans la portière et augmentent le poids de la portière. De plus, les haut-parleurs disposés classiquement à l'avant du véhicule sont relativement éloignés des oreilles des passagers, ce qui résulte en une perte de performance haute-fidélité pour ces derniers. En particulier, les hautes fréquences sont souvent mal restituées car elles ne suivent pas un chemin direct du haut-parleur jusqu'aux oreilles des passagers en raison de la présence obstacles, tels que les sièges et les autres passagers, sur la trajectoire du son. En outre, les haut-parleurs du tableau de bord peuvent entrainer une distribution inégale du son dans l'habitacle du véhicule.

De plus, la taille et le poids des portières sont limités, empêchant l'incorporation dans celles-ci de haut-parleurs lourds ou à large membrane, ce qui peut résulter en une mauvaise restitution des fréquences basses. Cet inconvénient est surmonté dans les systèmes audios classiques par l'incorporation d'un actionneur supplémentaire, appelé « *subwoofer* », positionné dans l'habitacle du véhicule ou dans le coffre. Cela conduit à une perte de place et à une augmentation du poids du véhicule.

Enfin, la position classique des haut-parleurs dans les portières ou le tableau de bord du véhicule peut réduire les performances d'effets sonores réalisés par des logiciels ou du matériel informatique (hardwares).

Différentes solutions de systèmes audios ont été proposées.

Le document US 10,250,983 décrit un système audio pour véhicule comprenant un contrôleur audio numérique et au moins deux modules processeur DSP/amplificateur/haut-parleur positionnés à différents endroits dans le véhicule et connectés au contrôleur via un câble unifilaire.

Le document US 2018/0012589 décrit un système audio configuré pour créer une pluralité de zones dans l'habitacle d'un véhicule et permettant, via une interface, de contrôler le son et le bruit dans une de ces zones.

Le document WO 98/42536 A1 décrit un système audio pour un véhicule comprenant une pluralité de systèmes d'enceintes.

Il existe un besoin de fournir un système audio pour véhicule pouvant être plus léger, avec une excellente performance sonore et une consommation d'électricité réduite.

### Résumé de l'invention

L'invention concerne en premier lieu un toit de véhicule, tel que défini dans la revendication 1.

Dans des modes de réalisation, les deux dispositifs audios sont configurés pour générer des hautes et/ou moyennes fréquences.

Dans des modes de réalisation, le toit comprend en outre au moins un haut-parleur ou actionneur configuré pour générer des hautes fréquences, de préférence situé sur le panneau.

Dans des modes de réalisation, le panneau a une forme quadrilatérale avec un premier bord, un deuxième bord, un troisième bord et un quatrième bord consécutifs, le toit comprenant :
- au moins un, de préférence au moins deux, dispositifs audios choisis parmi les haut-parleurs et les actionneurs, de préférence des haut-parleurs, positionnés sur le panneau, dans une zone périphérique adjacente au premier bord du panneau,
- au moins un, de préférence au moins deux, dispositifs audios choisis parmi les haut-parleurs et les actionneurs, de préférence des haut-parleurs, positionnés sur le panneau, dans une zone périphérique adjacente au troisième bord du panneau,
- un actionneur configuré pour générer des basses fréquences positionnés sur le panneau, dans une zone périphérique adjacente au deuxième bord du panneau, et
- un haut-parleur ou un actionneur configuré pour générer des hautes fréquences positionné sur le panneau, dans une zone périphérique adjacente au quatrième bord du panneau.

Dans des modes de réalisation, le vitrage comprend une feuille de verre, de préférence de verre organique ou minéral.

Dans des modes de réalisation, le vitrage comprend une feuille en verre feuilleté comprenant au moins deux feuilles de verre entre lesquelles est inséré au moins un film intercalaire de nature plastique viscoélastique, le film intercalaire de nature plastique viscoélastique étant de préférence en poly(butyral de vinyle) ou en copolymère éthylène-acétate de vinyle, de préférence encore en poly(butyral de vinyle), plus préférentiellement en poly(butyral de vinyle) acoustique.

Dans des modes de réalisation, le toit comprend un nombre total de haut-parleurs et d'actionneurs (3, 4, 5) allant de 6 à 20.

L'invention concerne également un véhicule comprenant un toit tel que défini ci-dessus.

Dans des modes de réalisation, le véhicule comprend un pare-brise avant et/ou une lunette arrière et comprend au moins un actionneur configuré pour générer des basses fréquences positionné dans le pare-brise avant et/ou dans la lunette arrière.

Dans des modes de réalisation, le véhicule comprend un pare-brise avant et comprend au moins un haut-parleur ou actionneur configuré pour générer des hautes fréquences positionné dans le pare-brise avant.

Dans des modes de réalisation, le véhicule comprend au moins un montant, et comprend au moins un dispositif audio choisi parmi les haut-parleurs et les actionneurs situé dans l'au moins un montant.

Dans des modes de réalisation, le véhicule comprend au moins une portière et/ou un tableau de bord et/ou un pare-brise avant et/ou une lunette arrière, et comprend au moins un dispositif audio choisi parmi les haut-parleurs et les actionneurs positionné dans l'au moins une portière et/ou dans le tableau de bord et/ou dans le pare-brise avant et/ou dans la lunette arrière.

Dans des modes de réalisation, le véhicule est une automobile.

La présente invention permet de répondre au besoin exprimé ci-dessus. Elle fournit plus particulièrement un toit pour véhicule comprenant un système audio présentant de très bonnes performances sonores tout en pouvant être léger, compact et facilement intégré dans le toit d'un véhicule. En outre, le système audio selon l'invention présente également une ou de préférence plusieurs des propriétés avantageuses suivantes : il est compatible avec d'autres systèmes audios, il est peu voyant et esthétique, il est flexible, il peut être adapté à tout type de véhicule, il peut permettre un contrôle du bruit actif et la création d'effets sonores.

Cela est accompli grâce à la présence d'au moins un dispositif audio dans le toit du véhicule. Cela permet d'émettre un son en hauteur dans l'habitable du véhicule et proche des oreilles des passagers du véhicule, assurant ainsi une trajectoire du son, du dispositif audio jusqu'aux oreilles des passagers, relativement courte et avec peu ou pas d'obstacle. L'intelligibilité des sons, tels que les messages audios ou la musique, est ainsi améliorée pour les passagers. De plus, le dispositif audio étant fixé à des parties fixes du véhicule, cela permet de s'affranchir de structures stabilisatrices lourdes et encombrantes. En outre, lorsque l'au moins un dispositif audio est un actionneur, la présence d'un panneau dans le toit permet à ce panneau d'entrer en vibration afin de produire des ondes acoustiques.

Selon certains modes de réalisation particuliers, l'utilisation d'un actionneur configuré pour générer des basses fréquences peut permettre, par rapport à l'utilisation d'un haut-parleur woofer, d'améliorer la restitution des basses fréquences en raison de l'utilisation d'une plus grande surface vibrante.

### Brève description des figures

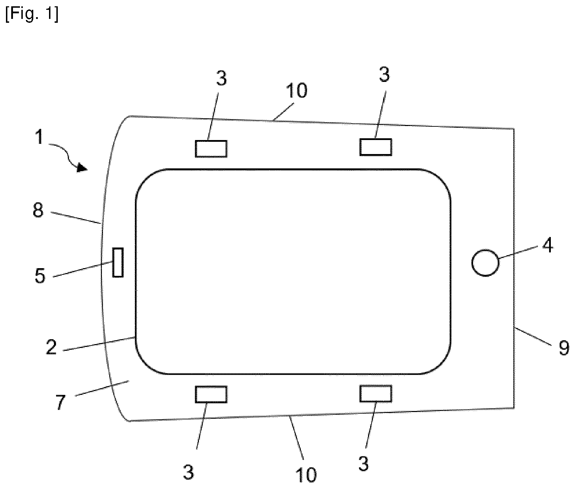

[Fig.1] représente une vue schématique d'un toit, vu du dessous, d'un exemple de véhicule selon l'invention.

### Description détaillée

L'invention est maintenant décrite plus en détail et de façon non limitative dans la description qui suit.

L'invention concerne un toit de véhicule comprenant un panneau et au moins un dispositif audio (3) choisi parmi les haut-parleurs et les actionneurs. Lorsque l'au moins un dispositif audio est un (ou plusieurs) actionneur(s), il(s) est (sont) situé(s) sur le panneau, le panneau étant capable d'entrer en vibration.

Par « *dispositif audio* » on entend un dispositif capable d'émettre des sons, par exemple de la musique ou de la voix. Par « *système audio* » on entend un système capable d'émettre des sons.

Par « *panneau* », on entend toute surface pouvant faire partie du toit.

Le panneau est un vitrage (le toit contient alors une partie vitrée, ou vitrage, et est appelé toit vitré dans le présent texte).

Par « *vitrage* », on entend tout élément ayant la forme d'une plaque et comprenant au moins une feuille (ou couche) de verre. Le vitrage peut être transparent ou opaque, par exemple lorsque la feuille de verre est recouverte d'un revêtement opaque. Le revêtement opaque peut être une peinture ou un émail, par exemple de couleur noire. Le vitrage selon l'invention peut comprendre une partie vitrée transparente et une partie vitrée opaque, de préférence la partie vitrée opaque entourant la partie vitrée transparente.

Par « *forme quadrilatère* », on entend tout élément ayant quatre côtés, rectilignes ou non, avec des angles qui peuvent être droits, arrondis ou autre.

Le véhicule peut être tout type de véhicule comprenant un habitacle délimité par un toit. De préférence, il s'agit d'un véhicule à moteur de transport terrestre, et plus préférentiellement, le véhicule est un véhicule automobile (voiture). Alternativement, le véhicule peut être un camion, une camionnette, ou un bus ou car.

Le toit peut être tout type de toit. Il peut s'agir d'un toit fixe. Par « *fixe* », on entend fixe ou destiné à être fixe, par rapport à l'ensemble du véhicule (étant entendu que le véhicule peut se déplacer). Alternativement, le toit peut être un toit ouvrant, c'est-à-dire comprenant une partie fixe et une partie mobile permettant de créer une ouverture.

Le toit, ouvrant ou non, contient un panneau, qui peut être une partie vitrée (ou un vitrage). Lorsque le toit selon l'invention est un toit vitré, il peut comprendre également une partie métallique, plus préférentiellement en tôle, de préférence la partie métallique du toit entoure le vitrage.

De préférence, dans le cas d'un toit ouvrant, la partie mobile du toit ouvrant comprend ou est constituée du panneau (par exemple le vitrage).

De préférence, la surface du panneau (par exemple le vitrage) représente au moins 40 %, ou au moins 50 %, ou au moins 60 %, ou au moins 70 %, ou au moins 80 %, ou au moins 90 %, ou au moins 95 %, ou la totalité, de la surface totale du toit.

Avantageusement, le vitrage comprend une feuille (ou panneau) en verre. Le verre peut être du verre organique ou minéral. Plus préférentiellement, le vitrage comprend ou est constitué de verre feuilleté. Par « *verre feuilleté* », on entend au moins deux feuilles de verre entre lesquelles est inséré au moins un film intercalaire généralement de nature plastique viscoélastique. Dans le cadre de l'invention, une feuille de verre feuilleté (comprenant deux feuilles de verre et le film intercalaire) sera considérée comme une seule feuille et non deux. Le film intercalaire de nature plastique peut comprendre une ou plusieurs couches, de préférence une ou deux couches, d'un polymère viscoélastique tel que le poly(butyral de vinyle) (PVB) ou un copolymère éthylène-acétate de vinyle (EVA), plus préférentiellement le poly(butyral de vinyle). Le film intercalaire peut être en PVB standard ou en PVB acoustique tri-couche, de préférence le film intercalaire est en PVB acoustique.

L'utilisation d'un toit comprenant un panneau comprenant du verre feuilleté, par rapport à un toit comprenant un panneau de tôle sans vitrage, permet de former une structure de toit plus amortie, ce qui pourra faciliter la diffusion des basses fréquences et réduire les problèmes de vibration dans le véhicule. En outre, l'utilisation, dans le verre feuilleté, d'un PVB acoustique, par rapport à un PVB standard, permet d'encore améliorer la restitution en basses fréquence et de réduire les problèmes vibratoires.

Le toit peut également comprendre une garniture et/ou un pavillon.

Le toit peut être de forme quadrilatérale, en particulier de forme rectangulaire ou essentiellement rectangulaire (ou de forme trapézoïdale ou essentiellement trapézoïdale). Il est entendu que les bords d'un tel toit sont droits, ou essentiellement droits, c'est-à-dire qu'ils peuvent présenter une légère courbure, comme illustré dans la **figure 1****.**

Le panneau (par exemple le vitrage) du toit est de préférence de forme quadrilatérale, en particulier de forme rectangulaire ou essentiellement rectangulaire, ou de forme trapézoïdale ou essentiellement trapézoïdale. Les bords d'un tel panneau (par exemple vitrage) sont droits ou essentiellement droits (ils peuvent présenter une légère courbure).

Les bords du toit et les bords du panneau peuvent être confondus, partiellement ou en totalité, notamment lorsque le panneau représente la totalité de la surface du toit.

### Dispositif audio choisi parmi les haut-parleurs et les actionneurs positionnés dans le toit

Le toit selon l'invention comprend au moins un dispositif audio choisi parmi les haut-parleurs et les actionneurs. Le toit peut comprendre au moins deux dispositifs audios choisi parmi les haut-parleurs et les actionneurs, ou il peut comprendre au moins 4, ou au moins 5, ou au moins 6, ou au moins 8, ou au moins 10, ou au moins 12, ou au moins 15 de ces dispositifs audios. Le toit selon l'invention peut par exemple comprendre de 4 à 5, ou de 5 à 6, ou de 6 à 7, ou de 7 à 8, ou de 8 à 9, ou de 9 à 10, ou de 10 à 11, ou de 11 à 12, ou de 12 à 13, ou de 13 à 14, ou de 14 à 15, ou de 15 à 16, ou de 16 à 17, ou de 17 à 18, ou de 18 à 19, de ces dispositifs audios.

Les haut-parleurs selon l'invention peuvent être tout haut-parleur capable d'émettre des ondes sonores. Chacun de ces haut-parleurs comprend une membrane. La membrane du haut-parleur est de préférence entièrement au contact de l'air. La membrane peut être essentiellement plane. La membrane peut par exemple avoir une forme essentiellement rectangulaire ou carrée. Alternativement, la membrane peut par exemple avoir une forme essentiellement de disque, ou elliptique. Les ondes sonores sont produites par la membrane qui fait vibrer l'air ambiant (i.e. l'air à l'intérieur et à l'extérieur du haut-parleur). Le haut-parleur peut se présenter sous la forme d'une boîte, par exemple ayant une forme essentiellement de pavé droit, dont une des parois (e.g. faces) est la membrane ou comprend un orifice dans lequel se trouve la membrane. La boîte peut contenir de l'air, qui est donc de l'air à l'intérieur du haut-parleur.

Chaque haut-parleur peut indépendamment être un haut-parleur à aimant, comprenant un aimant et une bobine électromagnétique en plus de la membrane. L'aimant et la bobine transforment de l'énergie électrique en énergie mécanique qui est transmise à la membrane. La membrane transmet l'énergie mécanique à l'air ambiant ce qui le fait vibrer. Alternativement, le haut-parleur peut être un haut-parleur piézoélectrique. Un haut-parleur piézoélectrique comprend une céramique ou un polymère piézoélectrique sur lequel est fixée une membrane rayonnante. La céramique ou le polymère transforme de l'énergie électrique en énergie mécanique (de préférence de manière proportionnelle), qui est transmise à la membrane. La membrane transmet l'énergie mécanique à l'air ambiant, créant ainsi une onde acoustique.

Les haut-parleurs peuvent comprendre un isolant. Celui-ci peut permettre de réduire le rayonnement sonore vers l'extérieur du véhicule.

De préférence, les haut-parleurs ont une longueur de 30 à 200 mm, par exemple de 50 à 150 mm, et/ou une largeur de 10 à 100 mm, par exemple de 20 à 60 mm. Alternativement, les haut-parleurs peuvent avoir un diamètre de 10 à 150 mm, par exemple de 30 à 100 mm. Les haut-parleurs peuvent avoir une profondeur de 10 à 50 mm, par exemple de 12 à 30 mm.

La membrane n'est de préférence pas recouverte de garniture ou par une autre pièce du toit.

De préférence, la membrane des haut-parleurs est essentiellement parallèle au toit, de préférence au panneau (par exemple au vitrage).

De manière particulièrement avantageuse, les haut-parleurs sont configurés pour générer des hautes et/ou moyennes fréquences.

Par « *hautes fréquences* », on entend les ondes sonores de fréquence supérieure à 2000 Hz.

Par « *moyennes fréquences* », on entend les ondes sonores de fréquence allant de 300 à 2000 Hz.

Les actionneurs selon l'invention peuvent être tout actionneur transformant un courant électrique en énergie mécanique permettant de faire vibrer une surface, utilisée comme une membrane, pour créer une onde acoustique.

Les haut-parleurs possèdent leur propre membrane ; les actionneurs n'ont pas de membrane.

Dans le cadre de l'invention, les actionneurs font vibrer le panneau du toit. De préférence, le panneau que les actionneurs font vibrer comprend ou est constitué d'un vitrage. Le panneau peut également comprendre ou être constitué d'un ensemble consistant en un vitrage et une partie métallique du toit.

Les actionneurs peuvent avoir des dimensions telles que décrites ci-dessus en relation avec les haut-parleurs.

Lorsque le ou les dispositifs audios sont ou comprennent un ou plusieurs actionneurs, ces derniers sont de préférence configurés pour générer des hautes et/ou moyennes fréquences. Avantageusement, ces actionneurs comprennent un filtre de signal pour limiter la bande de fréquences générées, par exemple à des fréquences hautes et/ou moyennes. Le filtre de signal peut ainsi limiter la bande de fréquences émises à une plage de fréquences, cette plage de fréquences ayant une borne inférieure qui est supérieure ou égale à 300 Hz. Dans d'autres modes de réalisation, le filtre de signal peut limiter la bande de fréquences émises à une plage de fréquences ayant une borne inférieure qui est supérieure ou égale à 150 Hz.

De préférence, le ou les dispositifs audios (choisis parmi les haut-parleurs et les actionneurs) sont (indépendamment) situés dans une zone périphérique du toit. Par « *zone périphérique du toit* », on entend une partie du toit adjacente aux bords du toit (c'est-à-dire aux bords délimitant le toit). Dans des modes de réalisations, la zone périphérique du toit est la zone du toit adjacente aux bords du toit et de largeur (c'est-à-dire selon une direction orthogonale au bord du toit, dans le plan du toit) inférieure ou égale à 50 cm, ou inférieure ou égale à 40 cm, ou inférieure ou égale à 30 cm, ou inférieure ou égale à 25 cm.

En particulier, lorsque le toit a une forme quadrilatérale, avec un premier bord, un deuxième bord, un troisième bord et un quatrième bord consécutifs, le ou les dispositifs audios peuvent être situés (indépendamment) dans une zone périphérique du toit adjacente au quatrième bord (par exemple le bord avant, c'est-à-dire destiné à être du côté de l'avant du véhicule), par exemple dans une zone du toit adjacente au quatrième bord et de largeur inférieure ou égale à 50 cm, ou inférieure ou égale à 40 cm, ou inférieure ou égale à 30 cm, ou inférieure ou égale à 25 cm, et/ou dans une zone périphérique du toit adjacente au deuxième bord (par exemple le bord arrière, c'est-à-dire destiné à être du côté de l'arrière du véhicule), par exemple dans une zone du toit adjacente au deuxième bord et de largeur inférieure ou égale à 50 cm, ou inférieure ou égale à 40 cm, ou inférieure ou égale à 30 cm, ou inférieure ou égale à 25 cm, et/ou dans une zone périphérique du toit adjacente au premier et/ou au troisième bords (par exemple, l'un et/ou l'autre des bords latéraux), par exemple dans une zone du toit adjacente au premier et/ou au troisième bords et de largeur inférieure ou égale à 50 cm, ou inférieure ou égale à 40 cm, ou inférieure ou égale à 30 cm, ou inférieure ou égale à 25 cm.

Le ou les dispositifs audios peuvent être (indépendamment) situés dans une zone périphérique adjacente à un bord du toit à proximité d'un coin du toit, par exemple dans une zone de longueur (c'est-à-dire selon une direction parallèle audit bord du toit, dans le plan du toit), inférieure ou égale à un tiers dudit bord du toit (cette longueur étant mesurée en partant dudit coin).

De manière particulièrement avantageuse, le toit comprend au moins deux dispositifs audios choisis parmi les haut-parleurs et les actionneurs et, lorsque le toit a une forme quadrilatérale, au moins un dispositif audio est situé dans une zone périphérique adjacente à un premier bord du toit (par exemple dans une zone du toit adjacente à un premier bord et de largeur inférieure ou égale à 50 cm, ou inférieure ou égale à 40 cm, ou inférieure ou égale à 30 cm, ou inférieure ou égale à 25 cm) et au moins un autre dispositif audio est situé dans une zone périphérique du toit adjacente à un deuxième bord du toit qui fait face au premier bord (par exemple dans une zone du toit adjacente à un deuxième bord et de largeur inférieure ou égale à 50 cm, ou inférieure ou égale à 40 cm, ou inférieure ou égale à 30 cm, ou inférieure ou égale à 25 cm). Par des bords qui se font face, on entend des bords qui ne sont pas consécutif l'un à l'autre ; de préférence, des bords qui se font face sont parallèles ou essentiellement parallèles.

Le dispositif audio est avantageusement situé sur le panneau (par exemple le vitrage). Lorsque le toit comprend plusieurs de ces dispositifs audios, ils peuvent être tous situés sur le panneau (par exemple le vitrage), ou certains seulement.

Le ou les dispositifs audios peuvent être (indépendamment) situés sur le panneau, dans une zone périphérique du panneau (étant étendu que cette zone périphérique fait partie du panneau). Par « *zone périphérique du panneau* », on entend une partie du panneau (par exemple le vitrage) adjacente aux bords du panneau (par exemple le vitrage). Elle peut signifier la zone du panneau (par exemple le vitrage) adjacente aux bords du panneau (par exemple le vitrage) et de largeur (c'est-à-dire selon une direction orthogonale au bord du panneau (par exemple du vitrage), dans le plan du panneau (par exemple du vitrage)) inférieure ou égale à 50 cm, ou inférieure ou égale à 40 cm, ou inférieure ou égale à 30 cm, ou inférieure ou égale à 25 cm.

Lorsque le panneau (par exemple le vitrage) a une forme quadrilatérale, avec un premier bord, un deuxième bord, un troisième bord et un quatrième bord consécutifs, le ou les dispositifs audios peuvent être (indépendamment) situés dans le panneau (par exemple le vitrage) dans une zone périphérique du panneau (par exemple du vitrage) adjacente au quatrième bord (par exemple le bord avant, c'est-à-dire destiné à être du côté de l'avant du véhicule), par exemple dans une zone du panneau (par exemple du vitrage) adjacente au quatrième bord et de largeur inférieure ou égale à 50 cm, ou inférieure ou égale à 40 cm, ou inférieure ou égale à 30 cm, ou inférieure ou égale à 25 cm, et/ou dans une zone périphérique du panneau (par exemple du vitrage) adjacente au deuxième bord (par exemple le bord arrière, c'est-à-dire destiné à être du côté de l'arrière du véhicule), par exemple dans une zone du panneau (par exemple du vitrage) adjacente au deuxième bord et de largeur inférieure ou égale à 50 cm, ou inférieure ou égale à 40 cm, ou inférieure ou égale à 30 cm, ou inférieure ou égale à 25 cm, et/ou dans une zone périphérique du panneau (par exemple du vitrage) adjacente au premier et/ou au troisième bords (par exemple, l'un et/ou l'autre des bords latéraux), par exemple dans une zone du panneau (par exemple du vitrage) adjacente au premier et/ou au troisième bords et de largeur inférieure ou égale à 50 cm, ou inférieure ou égale à 40 cm, ou inférieure ou égale à 30 cm, ou inférieure ou égale à 25 cm.

Le ou les dispositifs audios peuvent être (indépendamment) situés dans le panneau (par exemple le vitrage), dans une zone périphérique adjacente à un bord du panneau (par exemple du vitrage) à proximité d'un coin du panneau (par exemple du vitrage), par exemple dans une zone de longueur (c'est-à-dire selon une direction parallèle audit bord du vitrage, dans le plan du vitrage), inférieure ou égale à un tiers dudit bord du panneau (par exemple du vitrage) (cette longueur étant mesurée en partant dudit coin).

De manière particulièrement avantageuse, le toit comprend au moins deux dispositifs audios choisis parmi les haut-parleurs et les actionneurs situés sur le panneau (par exemple le vitrage) et, lorsque le panneau (par exemple le vitrage) a une forme quadrilatérale, au moins un dispositif audio est situé dans le panneau (par exemple le vitrage), dans une zone périphérique adjacente à un premier bord du panneau (par exemple du vitrage) (par exemple dans une zone du panneau (par exemple du vitrage) adjacente à un premier bord et de largeur inférieure ou égale à 50 cm, ou inférieure ou égale à 40 cm, ou inférieure ou égale à 30 cm, ou inférieure ou égale à 25 cm) et au moins un autre dispositif audio est situé dans le panneau (par exemple le vitrage) dans une zone périphérique du panneau (par exemple du vitrage) adjacente à un deuxième bord du panneau (par exemple du vitrage) qui fait face au premier bord (par exemple dans une zone du panneau (par exemple du vitrage) adjacente à un deuxième bord et de largeur inférieure ou égale à 50 cm, ou inférieure ou égale à 40 cm, ou inférieure ou égale à 30 cm, ou inférieure ou égale à 25 cm).

Le dispositif audio est un haut-parleur ou un actionneur. Lorsque le toit comprend plusieurs (au moins deux) de ces dispositifs audios, ceux-ci sont avantageusement des haut-parleurs. Alternativement, ils peuvent être des actionneurs. Dans une troisième variante, ils peuvent consister en un ou plusieurs haut-parleurs et un ou plusieurs actionneurs. L'utilisation de haut-parleurs, comparée à l'utilisation d'actionneurs, peut permettre de limiter le rayonnement sonore à l'extérieur du véhicule.

### Actionneur configuré pour générer des basses fréquences

Le toit selon l'invention comprend au moins un actionneur configuré pour générer des basses fréquences. Dans le cadre de la présente invention, cet actionneur configuré pour générer des basses fréquences est un dispositif audio différent, supplémentaire, du au moins un dispositif audio choisi parmi les haut-parleurs et les actionneurs tel que décrit ci-dessus.

Par « *basses fréquences* », on entend les ondes sonores de fréquence inférieure à 300 Hz.

La présence d'un tel actionneur peut permettre d'éviter l'utilisation d'un subwoofer additionnel et les inconvénients, en termes de poids additionnel et d'encombrement, liés à celle-ci.

Cet actionneur peut être tel que les actionneurs décrits ci-dessus (en relation avec l'au moins un dispositif audio choisi parmi les haut-parleurs et les actionneurs), sous réserve qu'il soit configuré pour générer des basses fréquences.

De manière préférée, l'actionneur configuré pour générer des basses fréquences est situé dans une zone périphérique du toit. La zone périphérique peut être telle que décrite ci-dessus. Lorsque le toit a une forme quadrilatérale, avec un premier bord, un deuxième bord, un troisième bord et un quatrième bord consécutifs, l'actionneur peut être situé dans une zone périphérique du toit adjacente au quatrième bord (par exemple le bord avant) et/ou dans une zone périphérique du toit adjacente au deuxième bord (par exemple le bord arrière) et/ou dans une zone périphérique du toit adjacente au premier et/ou troisième bord (par exemple à l'un et/ou l'autre des bords latéraux). Ces zones périphériques peuvent être telles que décrites ci-dessus.

La surface que l'actionneur configuré pour générer des basses fréquences fait vibrer peut comprendre ou être constituée d'un vitrage. La surface peut également comprendre ou être constituée d'un ensemble consistant en un vitrage et une partie métallique du toit. De préférence, la surface que l'actionneur configuré pour générer des basses fréquences fait vibrer est le panneau du toit.

Avantageusement, l'actionneur configuré pour générer des basses fréquences est situé sur le panneau (par exemple le vitrage), de préférence dans une zone périphérique du panneau (par exemple du vitrage). La zone périphérique du panneau (par exemple du vitrage) peut être telle que décrite ci-dessus. Lorsque le panneau (par exemple le vitrage) du toit a une forme quadrilatérale, avec un premier bord, un deuxième bord, un troisième bord et un quatrième bord consécutifs, l'actionneur peut être situé dans une zone périphérique du panneau (par exemple du vitrage) adjacente au quatrième bord (par exemple le bord avant) et/ou dans une zone périphérique du panneau (par exemple du vitrage) adjacente au deuxième bord (par exemple le bord arrière) et/ou dans une zone périphérique du panneau (par exemple du vitrage) adjacente au premier et/ou troisième bord (par exemple à l'un et/ou l'autre des bords latéraux). Ces zones périphériques peuvent être telles que décrites ci-dessus.

La localisation de l'actionneur configuré pour générer des basses fréquences dans le toit, et en particulier sur le panneau (par exemple le vitrage) permet d'améliorer l'émission des basses fréquences car, à cet emplacement, une relativement grande surface (par exemple le vitrage du toit ou l'ensemble vitrage/partie métallique du toit) peut être disponible pour vibrer (c'est-à-dire disponible en tant que membrane) afin de générer des basses fréquences.

L'au moins un actionneur configuré pour générer des basses fréquences peut comprendre un filtre de signal. Le filtre de signal permet de limiter la bande de fréquences émises aux basses fréquences. Le filtre de signal peut ainsi limiter la bande de fréquences émises à une plage de fréquences, cette plage de fréquences ayant une borne supérieure qui est inférieure ou égale à 300 Hz.

De manière générale, lors de l'utilisation du toit dans un véhicule, l'actionneur peut dans certains cas créer des phénomènes vibratoires dans le véhicule, se traduisant par exemple par la vibration du rétroviseur intérieur. Ce phénomène vibratoire est généralement localisé en fréquence. L'actionneur selon la présente invention peut comprendre un filtre de signal permettant de limiter la fréquence du signal diffusé par l'actionneur et de supprimer les fréquences responsables de ce phénomène vibratoire. De préférence, le filtre de signal peut effectuer un filtrage de type coupe-bande en basse fréquence.

De préférence, le toit comprend un seul actionneur configuré pour générer des basses fréquences.

### Haut-parleur ou actionneur configuré pour générer des basses fréquences

Le toit selon l'invention comprend au moins un haut-parleur ou actionneur configuré pour générer des hautes fréquences. Ce haut-parleur ou actionneur est également appelé « *tweeter* ». Dans le cadre de la présente invention, ce haut-parleur ou actionneur configuré pour générer des hautes fréquences est un dispositif audio différent, supplémentaire, du au moins un dispositif audio choisi parmi les haut-parleurs et les actionneurs tel que décrit ci-dessus.

Ce tweeter peut être tel que les haut-parleurs ou actionneurs décrit ci-dessus (en relation avec l'au moins un dispositif audio choisi parmi les haut-parleurs et les actionneurs), sous réserve qu'il soit configuré pour générer des hautes fréquences.

Le tweeter peut comprendre un filtre de signal. Le filtre de signal permet de limiter la bande de fréquences émises aux hautes fréquences (c'est-à-dire de limiter la bande de fréquences émises à une plage de fréquences, cette plage de fréquences ayant une borne inférieure qui est supérieure ou égale à 2000 Hz).

De manière préférée, l'au moins un tweeter est situé dans une zone périphérique du toit. La zone périphérique peut être telle que décrite ci-dessus. Lorsque le toit a une forme quadrilatérale, avec un premier bord, un deuxième bord, un troisième bord et un quatrième bord consécutifs, l'actionneur peut être situé dans une zone périphérique du toit adjacente au quatrième bord (par exemple le bord avant) et/ou dans une zone périphérique du toit adjacente au deuxième bord (par exemple le bord arrière) et/ou dans une zone périphérique du toit adjacente au premier et/ou troisième bord (par exemple à l'un et/ou l'autre des bords latéraux). Ces zones périphériques peuvent être telles que décrites ci-dessus.

De manière particulièrement avantageuse, l'au moins un tweeter est situé sur le panneau (par exemple le vitrage), de préférence dans une zone périphérique du panneau (par exemple du vitrage). La zone périphérique du panneau (par exemple du vitrage) peut être telle que décrite ci-dessus. Lorsque le panneau (par exemple le vitrage) du toit a une forme quadrilatérale, avec un premier bord, un deuxième bord, un troisième bord et un quatrième bord consécutifs, le tweeter peut être situé dans une zone périphérique du panneau (par exemple du vitrage) adjacente au quatrième bord (par exemple le bord avant) et/ou dans une zone périphérique du panneau (par exemple du virtrage) adjacente au deuxième bord (par exemple le bord arrière) et/ou dans une zone périphérique du panneau (par exemple du vitrage) adjacente au premier et/ou troisième bord (par exemple à l'un et/ou l'autre des bords latéraux). Ces zones périphériques peuvent être telles que décrites ci-dessus.

De manière préférée, le tweeter est un haut-parleur.

De préférence, le toit comprend au moins deux tweeters. De manière moins préférée, le toit peut comprendre un seul tweeter.

De préférence, quand le toit comprend au moins un actionneur configuré pour générer des basses fréquences et au moins un tweeter, et lorsque le toit a une forme quadrilatérale, l'au moins un actionneur configuré pour générer des basses fréquences est situé dans une zone périphérique adjacente à un premier bord du toit (par exemple dans une zone du toit adjacente à un premier bord et de largeur inférieure ou égale à 50 cm, ou inférieure ou égale à 40 cm, ou inférieure ou égale à 30 cm, ou inférieure ou égale à 25 cm) et l'au moins un tweeter est situé dans une zone périphérique du toit adjacente à un deuxième bord du toit qui fait face au premier bord (par exemple dans une zone du toit adjacente à un deuxième bord et de largeur inférieure ou égale à 50 cm, ou inférieure ou égale à 40 cm, ou inférieure ou égale à 30 cm, ou inférieure ou égale à 25 cm).

De manière encore plus préférée, quand le toit comprend au moins un actionneur configuré pour générer des basses fréquences et au moins un tweeter situé sur le panneau (par exemple le vitrage), et lorsque le panneau (par exemple le vitrage) a une forme quadrilatérale, l'au moins un actionneur configuré pour générer des basses fréquences est situé dans une zone périphérique adjacente à un premier bord du panneau (par exemple du vitrage) (par exemple dans une zone du panneau (par exemple du vitrage) adjacente à un premier bord et de largeur inférieure ou égale à 50 cm, ou inférieure ou égale à 40 cm, ou inférieure ou égale à 30 cm, ou inférieure ou égale à 25 cm) et l'au moins un tweeter est situé dans une zone périphérique du panneau (par exemple du vitrage) adjacente à un deuxième bord du vitrage qui fait face au premier bord (par exemple dans une zone du panneau (par exemple du vitrage) adjacente à un deuxième bord et de largeur inférieure ou égale à 50 cm, ou inférieure ou égale à 40 cm, ou inférieure ou égale à 30 cm, ou inférieure ou égale à 25 cm).

### Eléments audios totaux du toit

Dans des modes de réalisation, le toit comprend un nombre total de haut-parleurs et/ou d'actionneurs allant de 4 à 20. Par exemple, le nombre total de haut-parleurs et/ou d'actionneurs du toit peut être de 4 à 5, ou de 5 à 6, ou de 6 à 7, ou de 7 à 8, ou de 8 à 9, ou de 9 à 10, ou de 10 à 11, ou de 11 à 12, ou de 12 à 13, ou de 13 à 14, ou de 14 à 15, ou de 15 à 16, ou de 16 à 17, ou de 17 à 18, ou de 18 à 19, ou de 19 à 20.

Le nombre total de haut-parleurs et/ou d'actionneurs sur le panneau (par exemple le vitrage) peut être de 4 à 20. Par exemple, le nombre total de haut-parleurs et/ou d'actionneurs sur le vitrage peut être de 4 à 5, ou de 5 à 6, ou de 6 à 7, ou de 7 à 8, ou de 8 à 9, ou de 9 à 10, ou de 10 à 11, ou de 11 à 12, ou de 12 à 13, ou de 13 à 14, ou de 14 à 15, ou de 15 à 16, ou de 16 à 17, ou de 17 à 18, ou de 18 à 19, ou de 19 à 20.

Selon des modes de réalisation, lorsque le toit a une forme quadrilatérale, avec un premier bord, un deuxième bord, un troisième bord et un quatrième bord consécutifs, le toit comprend :
- au moins un, de préférence au moins deux, dispositifs audios choisis parmi les haut-parleurs et les actionneurs, de préférence des haut-parleurs, positionnés dans une zone périphérique adjacente au premier bord du toit (par exemple un bord latéral),
- au moins un, de préférence au moins deux, dispositifs audios choisis parmi les haut-parleurs et les actionneurs, de préférence des haut-parleurs, positionnés dans une zone périphérique adjacente au troisième bord du toit (par exemple l'autre bord latéral),
- optionnellement un actionneur configuré pour générer des basses fréquences positionnés dans une zone périphérique adjacente au deuxième bord du toit (par exemple le bord arrière), et
- optionnellement un tweeter positionné dans une zone périphérique adjacente au quatrième bord du toit (par exemple le bord avant).

De manière particulièrement avantageuse, lorsque le panneau (par exemple le vitrage) a une forme quadrilatérale, avec un premier bord, un deuxième bord, un troisième bord et un quatrième bord consécutifs, le toit peut comprendre :
- au moins un, de préférence au moins deux, dispositifs audios choisis parmi les haut-parleurs et les actionneurs, de préférence des haut-parleurs, positionnés sur le panneau (par exemple le vitrage), dans une zone périphérique adjacente au premier bord du panneau (par exemple du vitrage),
- au moins un, de préférence au moins deux, dispositifs audios choisis parmi les haut-parleurs et les actionneurs, de préférence des haut-parleurs, positionnés sur le panneau (par exemple le vitrage), dans une zone périphérique adjacente au troisième bord du panneau (par exemple du vitrage),
- optionnellement un actionneur configuré pour générer des basses fréquences positionnés sur le panneau (par exemple le vitrage), dans une zone périphérique adjacente au deuxième bord du panneau (par exemple du vitrage), et
- optionnellement un tweeter positionné sur le panneau (par exemple le vitrage), dans une zone périphérique adjacente au quatrième bord du panneau (par exemple du vitrage).

Les haut-parleurs et/ou actionneurs du système audio (en particulier l'au moins un dispositif audio choisi parmi les haut-parleurs et les actionneurs, l'éventuel au moins un actionneur configuré pour générer des basses fréquences, et l'éventuel au moins un tweeter) peuvent être indépendamment les uns des autres fixés dans le toit (et notamment sur le panneau (par exemple le vitrage)) par n'importe quel moyen de fixation. Les moyens de fixations peuvent être rigides ou plus souples. Des moyens de fixation utilisables selon l'invention sont la colle, un ruban adhésif, en particulier un ruban adhésif double-face, ou une combinaison de ceux-ci. Alternativement, ou additionnellement, les haut-parleurs et/ou d'actionneurs peuvent être fixés au moyen de supports, par exemple de pièces en plastique, fixés dans le toit (par exemple fixés sur le panneau (par exemple le vitrage) du véhicule) dans lesquels les haut-parleurs et/ou actionneurs sont clipsés ou bien les haut-parleurs et/ou d'actionneurs peuvent être encapsulés dans un support, par exemple une pièce en plastique, l'ensemble haut-parleurs et/ou actionneurs/support étant amovible par rapport au reste du toit. Ces derniers modes de réalisation présentent l'avantage que le haut-parleur et/ou l'actionneur est amovible par rapport au toit et peut être facilement retiré et changé, par exemple en cas de panne.

Les fils d'alimentation et autres éléments audios associés aux haut-parleurs et actionneurs du toit peuvent être arrangés à l'intérieur de la garniture du toit ou dans le pavillon sous le toit, par exemple de manière à être cachés et non-visibles.

Le mode de réalisation suivant illustre l'invention sans la limiter.

En faisant référence à la **figure 1****,** un toit 1 de véhicule comprend plusieurs dispositifs audios (3, 4, 5). Dans ce mode de réalisation, le toit 1 est un toit vitré essentiellement rectangulaire, le vitrage s'étendant sur la totalité de la surface du toit. Le panneau du toit est constitué par ce vitrage. Le vitrage comprend une partie vitrée transparente 2 entourée d'une partie vitrée opaque (ou partie de masquage) 7. La partie vitrée opaque 7 peut par exemple comprendre un revêtement opaque, destiné à masquer les différents éléments de fixation qu'elle pourrait comprendre. Quatre haut-parleurs 3 configurés pour générer des moyennes et hautes fréquences sont placés sur la partie vitrée opaque 7 du toit 1, dans une zone périphérique adjacente aux bords latéraux 10 du toit (deux à proximité d'un bord latéral 10, et deux autres à proximité de l'autre bord latéral 10). Dans la configuration illustrée, chaque haut-parleur 3 à proximité d'un bord latéral 10 fait face à un haut-parleur 3 à proximité de l'autre bord latéral 10. Un actionneur configuré pour générer des basses fréquences 4 est positionné à l'arrière du toit, c'est-à-dire dans une zone périphérique adjacente au bord arrière 9 du toit ; et un haut-parleur tweeter (c'est-à-dire un haut-parleur configuré pour générer des hautes fréquences) 5 est positionné à l'avant du toit, c'est-à-dire dans une zone périphérique adjacente au bord avant 8 du toit.

A titre d'exemple, les haut-parleurs 3 sont de forme parallélépipédique et ont une longueur de 100 mm, une largeur de 45 mm et une profondeur de 20,5 mm. L'actionneur configuré pour générer des basses fréquences 4 est de forme cylindrique et a un diamètre de 53 mm et une profondeur de 17,3 mm et le tweeter 5 est de forme parallélépipédique et a une longueur de 57,5 mm, une largeur de 23 mm et une profondeur de 14,85 mm.

Les haut-parleurs et actionneurs situés dans le toit sont donc placés bien au-dessus des sièges du véhicule et de la tête des passagers, permettant une trajectoire courte et directe du son jusqu'aux oreilles des passagers, ce qui assure une performance haute-fidélité et des capacités de restitution 3D du son au système audio.

### Véhicule

L'invention concerne également un véhicule comprenant un toit tel que décrit ci-dessus.

Le véhicule peut être tel que défini ci-dessus. En particulier, le véhicule est une automobile.

Le véhicule comprend un habitacle délimité par le toit.

Le véhicule peut également comprendre au moins une portière. Au sens de la présente invention, les termes « *portière* » et *« porte* » ont la même signification. Le véhicule selon l'invention peut également comprendre un pare-brise avant et/ou une lunette arrière. Le pare-brise avant peut être de forme quadrilatérale (en particulier de forme rectangulaire ou essentiellement rectangulaire, ou de forme trapézoïdale ou essentiellement trapézoïdale), en particulier avec un bord supérieur (c'est-à-dire du côté du haut du véhicule), un bord inférieur (c'est-à-dire du côté du véhicule) et deux bords latéraux. Le véhicule peut comprendre au moins un montant. Par « *montant* », on entend une partie du véhicule situé entre deux portières et/ou surfaces vitrées.

Dans la présente invention, les haut-parleurs et/ou les actionneurs du toit sont localisés dans l'habitacle du véhicule, c'est-à-dire qu'ils sont positionnés du côté du toit donnant sur l'habitacle du véhicule. Ainsi, la surface extérieure des membranes des haut-parleurs est orientée vers l'intérieur de l'habitacle. De préférence, la surface extérieure de la membrane est en contact avec l'air de l'habitacle du véhicule. Les actionneurs sont également en contact avec l'air de l'habitacle du véhicule.

Avantageusement, le toit du véhicule comprend au moins deux dispositifs audios choisis parmi les haut-parleurs et les actionneurs, ceux-ci étant positionnés dans le toit de manière à créer un son stéréophonique pour les passagers.

Le véhicule peut comprendre au moins un actionneur configuré pour générer des basses fréquences situé dans le pare-brise avant, de préférence en partie basse du pare-brise et/ou (lorsque le pare-brise comprend un rétroviseur intérieur) proche des fixations du rétroviseur intérieur du pare-brise avant, et/ou dans la lunette arrière, de préférence sur les bords de la lunette arrière. La partie basse du pare-brise avant peut consister en une partie du pare-brise adjacente au bord inférieur du pare-brise et de largeur (c'est-à-dire selon une direction orthogonale au bord inférieur du pare-brise, dans le plan du pare-brise) inférieur ou égale à 30 cm. Par « *proche des fixations du rétroviseur intérieur* » on peut entendre situé dans une zone du pare-brise circulaire de rayon inférieur ou égal à 15 cm dont le centre est constitué par les fixations du rétroviseur intérieur. Par « *sur les bords de la lunette arrière* », on peut entendre que le dispositif audio est adjacent à un bord de la lunette arrière. Aux emplacements décrits ci-dessus, une relativement grande surface est disponible pour la vibration, ce qui peut améliorer l'émission des basses fréquences. Ces modes de réalisation sont toutefois moins préférés car le pare-brise et/ou la lunette arrière peuvent contenir d'autres éléments, tels que des rétroviseurs, des caméras, des détecteurs de pluie..., susceptibles d'induire des vibrations pouvant altérer les performances de l'actionneur. L'actionneur peut alors comprendre une structure stabilisatrice pour éliminer ces vibrations. Ces modes de réalisation peuvent venir en alternative ou en addition de la présence d'un actionneur configuré pour générer des basses fréquences dans le toit du véhicule.

Le véhicule peut comprendre au moins un tweeter situé dans le parebrise avant, de préférence en partie basse du pare-brise, plus préférentiellement en partie basse et dans une ou les deux zones latérales du pare-brise avant. De manière particulièrement préférée, le système audio comprend au moins deux tweeters situés en partie basse du parebrise dans les deux zones latérales (c'est-à-dire à gauche et à droite) du parebrise avant, au moins un tweeter étant situé dans une zone latérale du pare-brise et au moins un autre tweeter étant situé dans l'autre zone latérale. La zone latérale du pare-brise peut consister en une zone adjacente à un bord latéral du parebrise et de largeur (c'est-à-dire selon une direction orthogonale au bord latéral du pare-brise, dans le plan du pare-brise) inférieure ou égale à 50 cm. Ces modes de réalisation peuvent venir en alternative ou en addition de la présence d'un tweeter dans le toit du véhicule.

Le véhicule selon l'invention peut également comprendre au moins un haut-parleur et/ou actionneur positionné dans au moins un montant du véhicule. Celui-ci peut être un haut-parleur et/ou un actionneur tel que décrit ci-dessus.

Le véhicule selon l'invention peut également comprendre au moins un haut-parleur et/ou actionneur positionné dans au moins une portière du véhicule. Celui-ci peut être un haut-parleur et/ou un actionneur tel que décrit ci-dessus.

Le véhicule selon l'invention peut également comprendre au moins un haut-parleur et/ou actionneur positionné dans le tableau de bord du véhicule. Celui-ci peut être un haut-parleur et/ou un actionneur tel que décrit ci-dessus.

Le véhicule selon l'invention peut également comprendre au moins un haut-parleur et/ou actionneur positionné dans le pare-brise avant et/ou dans la lunette arrière. Ce haut-parleur et/ou actionneur peut être situé, en particulier s'il s'agit d'un actionneur, en partie basse du pare-brise avant et/ou (lorsque le pare-brise comprend un rétroviseur intérieur) proche des fixations du rétroviseur intérieur du pare-brise avant, et/ou sur les bords de la lunette arrière. Alternativement ou additionnellement, il peut être situé, en particulier s'il s'agit d'un haut-parleur, en partie basse et dans une zone latérale ou les deux zones latérales (c'est-à-dire à gauche et à droite) du pare-brise avant ; de préférence au moins un haut-parleur est situé dans une zone latérale du pare-brise et au moins un deuxième haut-parleur est situé dans l'autre zone latérale du pare-brise. Le au moins un haut-parleur et/ou actionneur positionné dans le pare-brise avant et/ou dans la lunette arrière peut être un haut-parleur et/ou un actionneur tel que décrit ci-dessus.

Dans d'autres variantes, les portières du véhicule ne comprennent pas de dispositif audio choisis parmi les haut-parleurs et les actionneurs.

Le véhicule peut ne pas comprendre de dispositif audio choisi parmi les haut-parleurs et les actionneurs dans les montants et/ou dans le tableau de bord et/ou dans le pare-brise avant et/ou dans la lunette arrière.

Dans des modes de réalisation, le véhicule comprend un nombre total de haut-parleurs et/ou d'actionneurs allant de 1 à 20, de préférence de 2 à 20, plus préférentiellement de 3 à 20, encore plus préférentiellement de 6 à 15. Par exemple, le nombre total de haut-parleurs et/ou d'actionneurs du véhicule peut être de 1 à 2, ou de 2 à 3, ou de 3 à 4, ou de 4 à 5, ou de 5 à 6, ou de 6 à 7, ou de 7 à 8, ou de 8 à 9, ou de 9 à 10, ou de 10 à 11, ou de 11 à 12, ou de 12 à 13, ou de 13 à 14, ou de 14 à 15, ou de 15 à 16, ou de 16 à 17, ou de 17 à 18, ou de 18 à 19, ou de 19 à 20.

Les haut-parleurs et/ou d'actionneurs du véhicule peuvent faire partie d'un système audio qui peut également comprendre une carte contrôleur audio numérique (DAS pour « *digital audio controller* » en anglais) à canaux multiples et/ou un ou plusieurs amplificateurs. Ceux-ci peuvent être tel qu'ils sont dans les systèmes audios pour véhicules classiques, ou peuvent être situés dans le coffre du véhicule.

## Revendications

1. Toit (1) de véhicule, notamment d'automobile, comprenant :
- un panneau, et
- au moins un dispositif audio (3) situé sur le panneau, le dispositif audio (3) étant choisi parmi les haut-parleurs et les actionneurs,
et lorsque l'au moins un dispositif audio (3) est un actionneur, le panneau étant capable d'entrer en vibration, le toit étant **caractérisé en ce que** le panneau est un vitrage (2, 7) et a une forme quadrilatérale avec un premier bord, un deuxième bord, un troisième bord et un quatrième bord consécutifs,
et **en ce que** le toit (1) comprend :
- au moins un dispositif audio (3) choisis parmi les haut-parleurs et les actionneurs, positionné sur le panneau, dans une zone adjacente au premier bord du panneau, la zone présentant une largeur selon une direction orthogonale au premier bord dans le plan du toit inférieure ou égale à 50 cm,
- au moins un dispositif audio (3) choisis parmi les haut-parleurs et les actionneurs, positionné sur le panneau, dans une zone adjacente au troisième bord du panneau, la zone présentant une largeur selon une direction orthogonale au troisième bord dans le plan du toit inférieure ou égale à 50 cm,
- un actionneur configuré pour générer des basses fréquences positionnés sur le panneau dans une zone adjacente au deuxième bord du panneau, la zone présentant une largeur selon une direction orthogonale au deuxième bord dans le plan du toit inférieure ou égale à 50 cm.

2. Toit (1) selon l'une des revendications 1, dans lequel les deux dispositifs audios (3) sont configurés pour générer des hautes et/ou moyennes fréquences.

3. Toit (1) selon la revendication 1 ou 2, comprenant en outre au moins un haut-parleur ou actionneur configuré pour générer des hautes fréquences (5), de préférence situé sur le panneau.

4. Toit (1) selon l'une des revendications 1 à 3, dans lequel le vitrage (2, 7) comprend une feuille de verre, de préférence de verre organique ou minéral.

5. Toit (1) selon l'une des revendications 1 à 4, dans lequel le vitrage (2, 7) comprend une feuille en verre feuilleté comprenant au moins deux feuilles de verre entre lesquelles est inséré au moins un film intercalaire de nature plastique viscoélastique, le film intercalaire de nature plastique viscoélastique étant de préférence en poly(butyral de vinyle) ou en copolymère éthylène-acétate de vinyle, de préférence encore en poly(butyral de vinyle), plus préférentiellement en poly(butyral de vinyle) acoustique.

6. Toit (1) selon l'une des revendications 1 à 5, comprenant un nombre total de haut-parleurs et d'actionneurs (3, 4, 5) allant de 4 à 20.

7. Véhicule comprenant un toit (1) selon l'une des revendications 1 à 6.

8. Véhicule selon la revendication 7, comprenant un pare-brise avant et/ou une lunette arrière et comprenant au moins un actionneur configuré pour générer des basses fréquences (4) positionné dans le pare-brise avant et/ou dans la lunette arrière.

9. Véhicule selon la revendication 7 ou 8, comprenant un pare-brise avant et comprenant au moins un haut-parleur ou actionneur configuré pour générer des hautes fréquences (5) positionné dans le pare-brise avant.

10. Véhicule selon l'une des revendications 7 à 9, comprenant au moins un montant, et comprenant au moins un dispositif audio choisi parmi les haut-parleurs et les actionneurs situé dans l'au moins un montant.

11. Véhicule selon l'une des revendications 7 à 10, comprenant au moins une portière et/ou un tableau de bord et/ou un pare-brise avant et/ou une lunette arrière, et comprenant au moins un dispositif audio choisi parmi les haut-parleurs et les actionneurs positionné dans l'au moins une portière et/ou dans le tableau de bord et/ou dans le pare-brise avant et/ou dans la lunette arrière.

12. Véhicule selon l'une des revendications 7 à 11, qui est une automobile.

## Patentansprüche

1. Fahrzeugdach (1), insbesondere für ein Kraftfahrzeug, umfassend:
- ein Panel und
- mindestens eine Audiovorrichtung (3), die auf dem Panel gelegen ist, wobei die Audiovorrichtung (3) aus Lautsprechern und Aktuatoren ausgewählt ist,
und wenn die mindestens eine Audiovorrichtung (3) ein Aktuator ist, das Panel fähig ist, in Schwingung versetzt zu werden, wobei das Dach **dadurch gekennzeichnet ist, dass** das Panel eine Verglasung (2, 7) ist und eine viereckige Form mit einem ersten Rand, einem zweiten Rand, einem dritten Rand und einem vierten Rand, die aufeinanderfolgen, vorweist,
und **dadurch, dass** das Dach (1) umfasst:
- mindestens eine Audiovorrichtung (3), ausgewählt aus den Lautsprechern und den Aktuatoren, die auf dem Panel in einem Bereich angrenzend an den ersten Rand des Panels positioniert ist, wobei der Bereich eine Breite in einer Richtung orthogonale zu dem ersten Rand in der Ebene des Dachs von kleiner als oder gleich 50 cm aufweist,
- mindestens eine Audiovorrichtung (3), ausgewählt aus den Lautsprechern und den Aktuatoren, die auf dem Panel in einem Bereich angrenzend an den dritten Rand des Panels positioniert ist, wobei der Bereich eine Breite in einer Richtung orthogonale zum dritten Rand in der Ebene des Dachs von kleiner oder gleich 50 cm aufweist,
- einen Aktuator, der zum Erzeugen von Niederfrequenzen konfiguriert ist, der auf dem Panel in einem Bereich angrenzend an den zweiten Rand des Panels positioniert ist, wobei der Bereich eine Breite in einer Richtung orthogonale zu dem zweiten Rand in der Ebene des Dachs von kleiner als oder gleich 50 cm aufweist.

2. Dach (1) nach Anspruch 1, wobei die zwei Audiovorrichtungen (3) zum Erzeugen von hohen und/oder mittleren Frequenzen konfiguriert sind.

3. Dach (1) nach Anspruch 1 oder 2, ferner umfassend mindestens einen Lautsprecher oder Aktuator, der zum Erzeugen von hohen Frequenzen (5) konfiguriert ist, der vorzugsweise auf dem Panel gelegen ist.

4. Dach (1) nach einem der Ansprüche 1 bis 3, wobei die Verglasung (2, 7) eine Glasscheibe, vorzugsweise aus organischem oder mineralischem Glas, umfasst.

5. Dach (1) nach einem der Ansprüche 1 bis 4, wobei die Verglasung (2, 7) eine Scheibe aus Verbundglas umfasst, umfassen mindestens zwei Glasscheiben, zwischen denen mindestens eine Zwischenschichtfolie aus viskoelastischem Kunststoff eingefügt ist, wobei die Zwischenlagefolie aus viskoelastischem Kunststoff vorzugsweise aus Polyvinylbutyral oder aus Ethylenvinylacetatcopolymer, weiter bevorzugt aus Polyvinylbutyral, mehr bevorzugt aus akustischem Polyvinylbutyral ist.

6. Dach (1) nach einem der Ansprüche 1 bis 5, umfassend eine Gesamtzahl von Lautsprechern und Aktuatoren (3, 4, 5) im Bereich von 4 bis 20.

7. Fahrzeug umfassend ein Dach (1) nach einem der Ansprüche 1 bis 6.

8. Fahrzeug nach Anspruch 7, umfassend eine vordere Windschutzscheibe und/oder eine Heckscheibe und umfassend mindestens einen Aktuator, der zum Erzeugen von Niederfrequenzen (4) konfiguriert und in der vorderen Windschutzscheibe und/oder in der Heckscheibe positioniert ist.

9. Fahrzeug nach Anspruch 7 oder 8, umfassend eine vordere Windschutzscheibe und umfassend mindestens einen Lautsprecher oder Aktuator, der zum Erzeugen von hohen Frequenzen (5) konfiguriert und in der vorderen Windschutzscheibe positioniert ist.

10. Fahrzeug nach einem der Ansprüche 7 bis 9, umfassend mindestens eine Säule und umfassend mindestens eine Audiovorrichtung, ausgewählt aus den Lautsprechern und den Aktuatoren, die in der mindestens einen Säule gelegen ist.

11. Fahrzeug nach einem der Ansprüche 7 bis 10, umfassend mindestens eine Tür und/oder ein Armaturenbrett und/oder eine vordere Windschutzscheibe und/oder eine Heckscheibe, und umfassend mindestens eine Audiovorrichtung, ausgewählt aus den Lautsprechern und den Aktuatoren, die in der mindestens einen Tür und/oder in dem Armaturenbrett und/oder in der vorderen Windschutzscheibe und/oder in der Heckscheibe positioniert ist.

12. Fahrzeug nach einem der Ansprüche 7 bis 11, das ein Kraftfahrzeug ist.

## Claims

1. A roof (1) of a vehicle, in particular a motor vehicle, comprising:
- a panel, and
- at least one audio device (3) located on the panel, the audio device (3) being selected from the loudspeakers and the actuators,
and when the at least one audio device (3) is an actuator, the panel being capable of vibrating, the roof being **characterized in that** the panel is a glazing (2, 7) and the roof having a quadrilateral shape with a first edge, a second edge, a third edge and a fourth edge, which are consecutive, and **in that** the roof (1) comprising:
- at least one audio device (3) selected from the loudspeakers and the actuators, positioned on the panel, in a peripheral zone adjacent to the first edge of the panel, the peripheral zone with a width according to a direction orthogonal to the first edge of the roof, less than or equal to 50 cm,
- at least one audio device (3) selected from the loudspeakers and the actuators, positioned on the panel, in a peripheral zone adjacent to the third edge of the panel, the peripheral zone with a width according to a direction orthogonal to the third edge of the roof, less than or equal to 50 cm,
- an actuator configured to generate low frequencies positioned on the panel in a peripheral zone adjacent to the second edge of the panel, the peripheral zone with a width according to a direction orthogonal to the second edge of the roof, less than or equal to 50 cm.

2. The roof (1) according to claim 1, wherein the two audio devices (3) being preferably configured to generate high and/or medium frequencies.

3. The roof (1) according to claim 1 or 2, further comprising at least one loudspeaker or actuator configured to generate high frequencies (5), preferably located on the panel.

4. The roof (1) according to one of claims 1 to 3, wherein the glazing (2, 7) comprises a glass sheet, preferably made of organic or mineral glass.

5. The roof (1) according to one of claims 1 to 4, wherein the glazing (2, 7) comprises a laminated glass sheet comprising at least two glass sheets between which at least one interlayer film of viscoelastic plastic nature is inserted, the interlayer film of viscoelastic plastic nature preferably being made of polyvinyl butyral or ethylene-vinyl acetate copolymer, even more preferably of polyvinyl butyral, more preferentially of acoustic polyvinyl butyral.

6. The roof (1) according to one of claims 1 to 5, comprising a total number of loudspeakers and actuators (3, 4, 5) ranging from 4 to 20.

7. A vehicle comprising a roof (1) according to one of claims 1 to 6.

8. The vehicle according to claim 7, comprising a front windscreen and/or a rear window and comprising at least one actuator configured to generate low frequencies (4) positioned in the front windscreen and/or in the rear window.

9. The vehicle according to claim 7 or 8, comprising a front windscreen and comprising at least one loudspeaker or actuator configured to generate high frequencies (5) positioned in the front windscreen.

10. The vehicle according to one of claims 7 to 9, comprising at least one pillar, and comprising at least one audio device selected from the loudspeakers and the actuators located in the at least one pillar.

11. The vehicle according to one of claims 7 to 10, comprising at least one door and/or a dashboard and/or a front windscreen and/or a rear window, and comprising at least one audio device selected from the loudspeakers and the actuators positioned in the at least one door and/or in the dashboard and/or in the front windscreen and/or in the rear window.

12. The vehicle according to one of claims 7 to 11, which is a motor vehicle.
